# EUROPÄISCHE PATENTSCHRIFT

(11) **EP 2 926 909 B1**
(45) Veröffentlichungstag und Bekanntmachung des Hinweises auf die Patenterteilung: **16.08.2017**
(21) Anmeldenummer: 15156308.7
(22) Anmeldetag: 24.02.2015
(51) Int. Cl.: B03C 3/12, B03C 3/41, B03C 3/49, B03C 3/017, B03C 3/76, B01D 53/32, F23J 15/02, F23L 17/00, F24H 1/28, F24H 9/00

(54) **Heizkessel**
Boiler
Chaudière

(30) Priorität: 03.04.2014 AT 502482014
(43) Veröffentlichungstag der Anmeldung: 07.10.2015
(73) Patentinhaber: GILLES Energie- und Umwelttechnik GmbH & Co KG, 4810 Gmunden (AT)
(72) Erfinder: Doneus, Rudolf, 4800 Attnang-Puchheim (AT); Krämer, Wolfgang, 5323 Ebenau (AT)
(74) Vertreter: Patentanwaltskanzlei Hübscher

(56) Entgegenhaltungen:
- WO-A1-2009/049647
- AT-A4- 505 295
- DE-U1-202010 016 019

## Beschreibung

Die Erfindung bezieht sich auf einen Heizkessel mit einer Brennkammer, einem der Brennkammer nachgeordneten Wärmetauscher mit mehreren an ein Saugzuggebläse angeschlossenen Abgaszügen sowie mit einem wenigstens eine Sprühelektrode und wenigstens eine Kollektorelektrode umfassenden elektrostatischen Abscheider für den Rauchgasstrom aus der Brennkammer.

Um die Umweltbelastung durch die Feststofffracht der Abgase aus Heizkesseln niedrig zu halten, die mit Brennstoffen insbesondere auf der Basis nachwachsender Rohstoffe betrieben werden, ist es bekannt (AT 505 295 A4, DE 202010016019 U1), die Rauchgase aus der Brennkammer über elektrostatische Abscheider zu leiten, die in den Wärmetauscherrohren eines Abgaszugs des Wärmetauschers eine Sprühelektrode aufweisen, die mit dem Rohrmantel als Kollektorelektrode zusammenwirken, sodass sich die ionisierten Feststoffpartikel der Rauchgase aus der Brennkammer am Rohrmantel der Wärmetauscherrohre ablagern und mit Hilfe von in den Wärmetauscherrohren axial verschiebbaren Reinigungseinrichtungen von den Wärmetauscherrohren abgelöst und in einem unterhalb der Abgaszüge des Wärmetauschers vorgesehenen Umlenkkammer gesammelt und aus dem Heizkessel ausgetragen werden können. Nachteilig bei diesen bekannten Heizkesseln ist allerdings, dass der Wärmeübergang zwischen den heißen Rauchgasen und dem Kesselwasser durch die Ablagerungen an den Wärmetauscherrohren beeinträchtigt wird. Dazu kommt, dass die Gefahr von Hochspannungsüberschlägen zwischen der Sprühelektrode und den als Kollektorelektroden geschalteten Abgaszügen des Wärmetauschers unvermeidbar ist. Außerdem liegt die Sprühelektrode im heißen Bereich des Rauchgasstroms aus der Brennkammer, was eine erhebliche thermische Belastung der Sprühelektroden mit sich bringt. Schließlich besteht die Gefahr, dass die Sprühelektroden bei Wartungsarbeiten im Wärmetauscher beschädigt werden.

Der Erfindung liegt somit die Aufgabe zugrunde, einen elektrostatischen Abscheider für einen Heizkessel zu auszugestalten, dass die Funktion des Wärmetauschers durch die elektrostatische Abscheidung der Feststoffpartikel im Rauchgasstrom aus der Brennkammer wenig beeinflusst wird und ein vorteilhafter, sicherer Betrieb des elektrostatischen Abscheiders gewährleistet werden kann.

Ausgehend von einem Heizkessel der eingangs geschilderten Art löst die die Erfindung die gestellte Aufgabe dadurch, dass die Sprühelektrode in einer von der Druckseite des Saugzuggebläses in den Rauchgasstrom aus der Brennkammer führenden Abgasrückleitung für einen Teil des Abgasstroms angeordnet und die Kollektorelektrode der Einmündung der Abgasrückleitung in den Rauchgasstrom aus der Brennkammer in Strömungsrichtung nachgeordnet ist.

Durch das Verlegen der Sprühelektrode außerhalb des Rauchgasstromes in den Bereich einer Rückführung eines Teils des Abgasstroms aus dem Wärmetauscher wird zunächst die Belastung der Sprühelektrode durch den heißen Rauchgasstrom aus der Brennkammer vermieden. Die elektrischen Anschlüsse mit ihren isolierten Durchführungen für die Sprühelektrode können außerhalb des Kesselgehäuses vorgesehen werden, was die Wartung des Heizkessels und des Wärmetauschers erleichtert, weil keine Rücksicht auf die aus dem Kesselbereich nicht zugängliche Sprühelektrode genommen werden muss. Da die Kollektorelektrode unabhängig von der Anordnung der Sprühelektrode innerhalb des Heizkessels angeordnet wird, kann die Gefahr von Hochspannungsüberschlägen zwischen der Sprühelektrode und der Kollektorelektrode ausgeschlossen werden. Über die durch die Sprühelektrode bedingte Ionisierung des rückgeführten Abgasteilstroms werden ja die abzuscheidenden Feststoffpartikel im Rauchgasstrom aus der Brennkammer erst beim Vermischen des ionisierten Abgasteilstroms mit dem Rauchgasstrom aus der Brennkammer ionisiert, um an der Kollektorelektrode abgeschieden zu werden. Die Abscheidung an der Kollektorelektrode verhindert eine Verschmutzung der Wärmetauscherrohre der Abgaszüge des Wärmetauschers, der somit nur einer Schmutzbelastung mit Feststoffresten ausgesetzt wird und daher auch über lange Wartungsintervalle vorteilhafte Wärmeübergangsbedingungen gewährleistet.

Die Rückführung eines Teils der Abgase aus dem Wärmetauscher in den heißen Abgasstrom aus der Brennkammer hat keinen Einfluss auf die Verbrennung, weil ja durch den Abgasteilstrom keine Frischluft in das Rauchgas-Abgassystem eingebracht wird. Da außerdem die Abgasmengen in keiner Weise verfälscht werden, werden die Verbrennungsbedingungen durch den rückgeführten Abgasteilstrom nicht beeinträchtigt. Es wird lediglich die Temperatur des Rauchgasstroms aus der Brennkammer verringert, was sich vorteilhaft auf die Schadstoffemission auswirkt.

Die an der Kollektorelektrode abgelagerten Feststoffpartikel aus dem Rauchgasstrom müssen von Zeit zu Zeit abgelöst und aus dem Heizkessel ausgetragen werden. Hierfür kann die Kollektorelektrode in einfacher Weise mit einer Klopfeinrichtung ausgestattet werden, mit deren Hilfe die angelagerten Feststoffpartikel von der Kollektorelektrode abgelöst werden können.

Um den mit Feststoffpartikeln beladenen Rauchgasstrom in für die Partikelabscheidung vorteilhafter Weise an der Kollektorelektrode vorbeiführen zu können, kann die Kollektorelektrode in einem dem Wärmetauscher vorgelagerten Rauchgaszug für das Rauchgas-Abgasgemisch vorgesehen werden. Die Kollektorelektrode bildet in diesem Fall vorzugsweise einen Verdrängungskörper für die Gemischströmung, sodass sich die ionisierten Feststoffpartikel an der Oberfläche dieses Verdrängungskörpers anlagern.

In der Zeichnung ist der Erfindungsgegenstand beispielsweise dargestellt. Es zeigen
- Fig. 1: einen erfindungsgemäßen Heizkessel in einem schematischen Aufriss und
- Fig. 2: den Heizkessel in einem vereinfachten Schnitt nach der Linie ||-|| der Fig. 1.

Der dargestellte Heizkessel weist eine Brennkammer 1 mit einem Stufenrost 2 auf, der über einen Brennstoffzulauf 3 mit stückeligem Brennstoff, vorzugsweise Pellets, Hackgut oder anderen biogenen Brennstoffen, beschickt werden kann. Die Rauchgase aus der Brennkammer 1 strömen über einen Rauchgasdurchtritt 4 in einen Nachverbrennungsraum 5, aus dem sie unter Beaufschlagung eines nachgeschalteten Wärmetauschers 6 mit Hilfe eines Saugzuggebläses 7 abgezogen und über einen Abgasanschluss 8 aus dem Heizkessel abgeführt werden. Der Wärmetauscher 6 umfasst mehrere jeweils aus mehreren Wärmetauscherrohren gebildete Abgaszüge 9, die von einer unteren Umlenkkammer 10 ausgehen und in einer oberen, an das Saugzuggebläse 7 angeschlossenen Sammelkammer 11 münden. Zwischen dem Wärmetauscher 6 und dem Nachverbrennungsraum 5 ist ein dem Wärmetauscher 6 vorgelagerter, in der Umlenkkammer 10 mündender Rauchgaszug 12 vorgesehen.

Die Abgaszüge 9 sind in herkömmlicher Weise mit Wirbelblechen 13 versehen, die zugleich als Reinigungswerkzeuge dienen und zu diesem Zweck an einen Stelltrieb 14 angeschlossen sind, über den sie innerhalb der die Abgaszüge 9 bildenden Wärmetauscherrohre axial hin- und hergehend verlagert werden können.

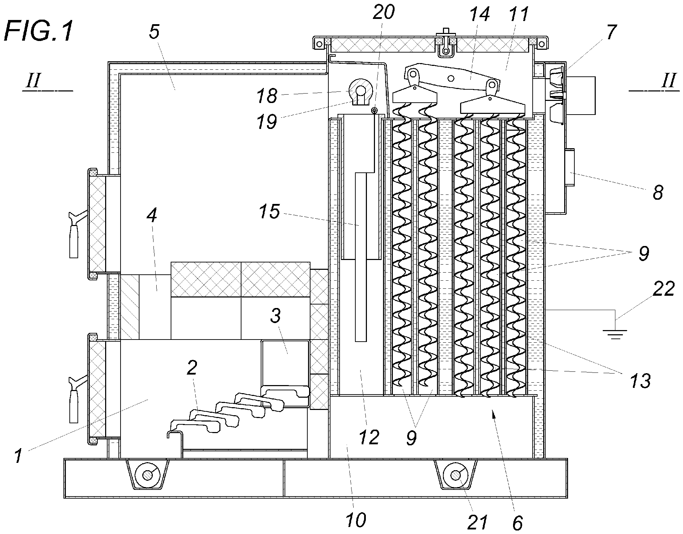

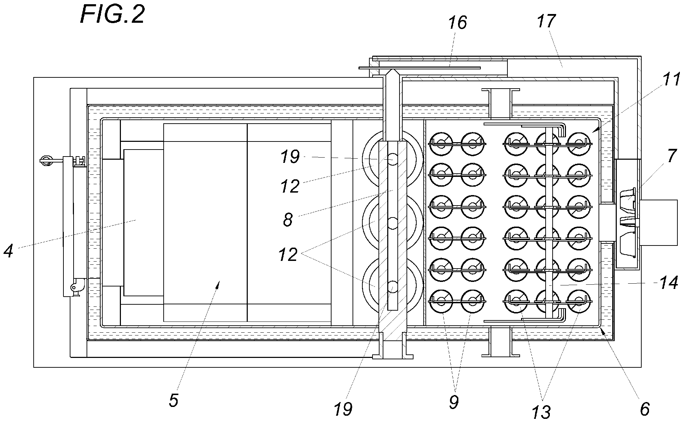

Im Bereich des dem Wärmetauscher 6 vorgeschalteten Rauchgaszugs 12 ist die Kollektorelektrode 15 eines elektrostatischen Abscheiders vorgesehen, dessen Sprühelektrode 16 unabhängig von der Kollektorelektrode 15 außerhalb des Kesselgehäuses in einer Abgasrückleitung 17 angeordnet ist, die von der Druckseite des Saugzuggebläses 7 ausgeht und in den Rauchgasstrom aus der Brennkammer 1 mündet, und zwar stromaufwärts der Kollektorelektrode 15. Wie insbesondere der Fig. 2 entnommen werden kann, wird der durch die Abgasrückleitung 17 über die Sprühelektrode 16 geführte Abgasteilstrom einer Verteilerleitung 18 zugeführt, die im Bereich des Rauchgaszugs 12 oberhalb von dessen Rauchgasrohren mit entsprechenden Ausströmöffnungen 19 versehen ist. Dem aus dem Nachverbrennungsraum 5 in den Rauchgaszug 12 strömenden Rauchgasstrom aus der Brennkammer 1 wird demnach der über die Abgasrückleitung 17 abgezweigte Abgasteilstrom aus dem Wärmetauscher 6 zugemischt. Da dieser rückgeführte Abgasteilstrom mit Hilfe der Sprühelektrode 16 ionisiert wird, können auch die mit dem Rauchgasstrom aus der Brennkammer 1 mitgeführten Feststoffpartikel über den ionisierten Abgasteilstrom ionisiert und an der nachfolgenden Kollektorelektrode 15 abgeschieden werden. Der elektrische Anschluss 20 der Kollektorelektrode 15 ist in der Fig. 1 angedeutet. Die an den Kollektorelektroden 15 in den einzelnen Rauchgasrohren des Rauchgaszugs 12 aus dem Rauchgasstrom abgeschiedenen Feststoffpartikel können somit die Abgaszüge 9 des Wärmetauschers 6 nicht mehr belasten.

Um die an der Kollektorelektrode 15 abgeschiedenen Feststoffpartikel von der Kollektorelektrode 15 lösen und aus dem Heizkessel austragen zu können, ist der Kollektorelektrode 15 in den einzelnen Rauchgasrohren jeweils eine aus Übersichtlichkeitsgründen nicht dargestellte Klopfeinrichtung zugeordnet, die bei ihrer Betätigung die Kollektorelektrode 15 in Schwingungen versetzt und für ein Ablösen der anhaftenden Feststoffpartikel sorgt. Die in die Umlenkkammer 10 abfallenden Feststoffpartikel können dann über eine Förderschnecke 21 zusammen mit den Feststoffpartikeln, die sich allenfalls noch im Bereich der Wärmetauscherrohre der Abgaszüge 9 des Wärmetauschers 6 ansammeln und mit Hilfe der Wirbelbleche 13 in die Umlenkkammer 10 abgestreift werden, aus dem Heizkessel ausgetragen werden.

Die vorteilhaft als Verdrängungskörper ausgebildete Kollektorelektrode 15 kann je nach der gewählten Betriebsart des elektrostatischen Abscheiders an Masse anliegen oder ein Hochspannungspotential aufweisen. Das Kesselgehäuse ist in jedem Fall an Masse zu legen, wie dies unter dem Bezugszeichen 22 angedeutet ist.

## Patentansprüche

1. Heizkessel mit einer Brennkammer (1), mit einem der Brennkammer (1) nachgeordneten Wärmetauscher (6), mit einem eine Druckseite aufweisenden Saugzuggebläse (7), mit mehreren an das Saugzuggebläse (7) angeschlossenen Abgaszügen (9) sowie mit einem wenigstens eine Sprühelektrode (16) und wenigstens eine Kollektorelektrode (15) umfassenden elektrostatischen Abscheider für den Rauchgasstrom aus der Brennkammer (1), **dadurch gekennzeichnet, dass** die Sprühelektrode (16) in einer von der Druckseite des Saugzuggebläses (7) in den Rauchgasstrom aus der Brennkammer (1) führenden Abgasrückleitung (17) für einen Teil des Abgasstroms angeordnet und die Kollektorelektrode (15) einer Einmündung der Abgasrückleitung (17) in den Rauchgasstrom aus der Brennkammer (1) in Strömungsrichtung nachgeordnet ist.

2. Heizkessel nach Anspruch 1, **dadurch gekennzeichnet, dass** die Kollektorelektrode (15) mit einer Klopfeinrichtung versehen ist.

3. Heizkessel nach Anspruch 1 oder 2, **dadurch gekennzeichnet, dass** die Kollektorelektrode (15) in einem dem Wärmetauscher (6) in Strömungsrichtung vorgelagerten Rauchgaszug (12) für das Rauchgas-Abgasgemisch vorgesehen ist.

## Claims

1. Boiler with a combustion chamber (1), with a heat exchanger (6) disposed downstream of the combustion chamber (1), with an induced draft fan (7) comprising a pressure side, with a plurality of exhaust gas flues (9) connected to the induced draft fan (7) and with an electrostatic separator for the smoke gas flow out of the combustion chamber (1), which separator comprises at least one discharge electrode (16) and at least one collector electrode (15), **characterised in that** the discharge electrode (16) is disposed in an exhaust gas return line (17) for a part of the exhaust gas flow, which line runs from the pressure side of the induced draft fan (7) into the smoke gas flow from the combustion chamber (1), and the collector electrode (15) is disposed downstream of a junction of the exhaust gas return line (17) into the smoke gas flow out of the combustion chamber (1) in the flow direction.

2. Boiler as claimed in claim 1, **characterised in that** the collector electrode (15) is provided with a knocking device.

3. Boiler as claimed in claim 1 or 2, **characterised in that** the collector electrode (15) is provided in a smoke gas flue (12) for the smoke gas-exhaust gas mixture disposed upstream of the heat exchanger (6) in the flow direction.

## Revendications

1. Chaudière avec une chambre de combustion (1), avec un échangeur de chaleur (6) disposé en aval de la chambre de combustion (1), avec un ventilateur à tirage induit (7) présentant un côté de pression, avec plusieurs conduits d'évacuation (9) raccordés au ventilateur à tirage induit (7), ainsi qu'avec un séparateur électrostatique comprenant au moins une électrode de collecteur (15) et au moins une électrode de décharge (16), pour le flux des gaz de fumée provenant de la chambre de combustion (1), **caractérisée en ce que** l'électrode de décharge (16) est disposée dans l'un des côtés de pression du ventilateur à tirage induit (7) dans la conduite de retour des gaz d'échappement (17) menant le flux des gaz de fumée de la chambre de combustion (1) pour une partie du flux des gaz d'échappement et **en ce que** l'électrode de collecteur (15) est disposée en aval d'une embouchure de la conduite de retour des gaz d'échappement (17) dans le flux des gaz de fumée de la chambre de combustion (1) dans la direction d'écoulement.

2. Chaudière selon la revendication 1, **caractérisée en ce que** l'électrode de collecteur (15) est munie d'un dispositif de frappe..

3. Chaudière selon la revendication 1 ou 2, **caractérisée en ce que** l'électrode de collecteur (15) est prévue dans un conduit des gaz de fumée (12) placé en amont, dans la direction d'écoulement, de l'échangeur de chaleur (6) pour le mélange gaz d'échappement-gaz de fumée.
